# EUROPEAN PATENT APPLICATION

(11) **EP 4 664 858 A1**
(43) Date of publication of application: **17.12.2025**
(21) Application number: 24769673.5
(22) Date of filing: 31.01.2024
(51) Int. Cl.: H04L 67/133

(54) **INTERFACE CALLING METHOD AND APPARATUS**

(30) Priority: 13.03.2023 CN 202310237793
(71) Applicant: Huawei Cloud Computing Technologies Co., Ltd., Guiyang, Guizhou 550025 (CN)
(72) Inventor: ZHOU, Wenli, Guiyang, Guizhou 550025 (CN); HU, Yiqiu, Guiyang, Guizhou 550025 (CN); HOU, Boyi, Guiyang, Guizhou 550025 (CN)
(74) Representative: MERH-IP Matias Erny Reichl Hoffmann Patentanwälte PartG mbB
(86) International application number: PCT/CN2024/074907
(87) International publication number: WO 2024/187977

(57) **Abstract**

Embodiments of this application disclose an interface calling method, to reduce interface opening costs of an application program. The method in embodiments of this application includes: A cloud server provides an ecosystem service market, where the ecosystem service market is configured to provide a service for calling an application programming interface between different applications; receives, through the ecosystem service market, an interface calling request sent by a first application, where the interface calling request carries an identity of the first application, the interface calling request is used to call an application programming interface of a second application, and the identity is an identifier allocated by the ecosystem service market; performs, through the ecosystem service market, authentication on the identity that is of the first application and that is carried in the interface calling request; and if the authentication succeeds, calls the application programming interface of the second application through the ecosystem service market.

## Description

This application claims priority to Chinese Patent Application No. 202310237793.8, filed with the China National Intellectual Property Administration on March 13, 2023 and entitled "INTERFACE CALLING METHOD AND APPARATUS", which is incorporated herein by reference in its entirety.

### TECHNICAL FIELD

Embodiments of this application relate to the computer field, and in particular, to an interface calling method and apparatus.

### BACKGROUND

With development of cloud computing technologies, more and more enterprises conveniently and quickly launch an application program APP or a web web application over a cloud service. However, an application program APP or a web web application developed based on a same cloud service provider still does not need to be invoked through application interface calling between different application programs or web applications.

Currently, in a process in which different application programs call each other through an application interface, security of calling is generally ensured in a key encryption manner. For example, an application program of Party A needs to encrypt an interface calling request and then send the encrypted interface calling request to an application program of Party B, the application program of Party B decrypts the encrypted interface calling request, encrypts a returned result again, and sends the encrypted the returned result to the application program of Party A, and the application program of Party A decrypts the returned result for use.

In a process of calling an interface between application programs, key encryption causes high costs of opening the interface between the application programs. In addition, when a network fault or even a physical fault occurs on a server of one application program, it is difficult for the other application program to perceive the fault. Consequently, stability of calling the interface is poor.

### SUMMARY

Embodiments of this application provide an interface calling method and apparatus, to reduce interface calling opening costs of an application program.

According to a first aspect, an embodiment of this application provides an interface calling method. The method may be performed by a cloud server, or may be performed by a component of a cloud server, for example, a processor, a chip, or a chip system of the cloud server, or may be implemented by a logical module or software that can implement all or some functions of a cloud server. For example, the cloud server performs the method. The interface calling method provided in the first aspect includes: The cloud server provides an ecosystem service market, where the ecosystem service market is used to provide a service for calling an application programming interface between different applications. The cloud server receives, through the ecosystem service market, an interface calling request sent by a first application, where the interface calling request carries an identity of the first application, the interface calling request is used to call an application programming interface of a second application, and the identity is provided by the ecosystem service market. The cloud server performs, through the ecosystem service market, authentication on the identity that is of the first application and that is carried in the interface calling request. If the authentication succeeds, the application programming interface of the second application is called through the ecosystem service market.

In embodiments of this application, the cloud server provides, by providing the ecosystem service market, a service related to application programming interface calling for different application programs, so that different application programs can call the application programming interfaces through the ecosystem service market. This reduces interface opening costs of different application programs, and improves security of interface calling between different application programs.

In a possible implementation, the cloud server receives, through the ecosystem service market, identity information sent by different applications, where the identity information includes one or more of the following information: service attribute information, industry information, and data scale information, and the different applications include the first application and the second application.

In embodiments of this application, different application programs can report identity information to the ecosystem service market, and the ecosystem service market ensures that an interface calling request is valid for interface calling between different application programs. This improves security of application programming interface calling between different application programs.

In a possible implementation, the cloud server performs ecosystem analysis on the identity information through the ecosystem service market, to obtain an analysis result, where the analysis result is used to recommend, to the first application, an application programming interface that can be called.

In embodiments of this application, the ecosystem service market can perform ecosystem analysis based on identity information reported by different application programs, to recommend, to the application programs, application programming interfaces that can be called. This improves richness of selecting the application programming interfaces that can be called by the application programs.

In a possible implementation, after the ecosystem service market performs ecosystem analysis based on identity information of the first application, the ecosystem service market can display, in a management interface, an analysis result obtained through the ecosystem analysis. The analysis result includes an application programming interface related to the first application and interface details, the interface details include details such as an application programming interface identifier, a function keyword, an interface document, quotation, and a quantity of times of being called. The first application can select, from related application programming interfaces, an application program for calling.

In embodiments of this application, the ecosystem service market can perform ecosystem analysis and display an analysis result in a display interface. The analysis result includes details such as an identifier of a recommended application programming interface, the function keyword, the interface document, a quotation, and the quantity of times of being called, so that the application program can select, from recommended related application programming interfaces, based on the details, an application programming interface for calling. This improves interface calling efficiency of the application program.

In a possible implementation, the cloud server obtains, through the ecosystem service market, resource monitoring information corresponding to the second application, where the resource monitoring information includes central processing unit CPU usage, a memory capacity, and a bandwidth. The cloud server sends a capacity expansion request message to the second application based on the resource monitoring information. The second application performs, based on the capacity expansion request message, capacity expansion on a cloud resource corresponding to the second application. A capacity expansion object may be an elastic cloud server, an EVS disk, an object storage service, or a bandwidth.

In embodiments of this application, the ecosystem service market can obtain resource monitoring information of an unused application program, and send the capacity expansion request message to the application program based on the resource monitoring information, thereby improving stability of the service provided by the application programming interface.

In a possible implementation, the cloud server displays interface calling information through the ecosystem service market, where the interface calling information includes one or more of the following: a quantity of interface calling requests, a quantity of times of successful interface calling, interface calling duration, and traffic consumption statistics information.

In embodiments of this application, a cloud service can generate the interface calling information of the application program based on an application programming interface calling process, and display the interface calling information through the cloud service market, so that the application program can conveniently query an interface calling record. This improves implementability of the solution.

In a possible implementation, the cloud server generates charging information based on the interface calling information, where the charging information includes one or more of the following: a total fee and an average daily fee that are generated for interface calling. The cloud server performs settlement on the charging information through the ecosystem service market.

In embodiments of this application, the cloud server can generate the charging information based on the interface calling information of the application program, and the application program can perform, based on the charging information, settlement on a value-added service provided by the ecosystem service market. This improves fee settlement efficiency and transparency.

In a possible implementation, the ecosystem service market can provide a security service for application programming interface calling assurance. In a process in which the ecosystem service market provides the security service, the ecosystem service market can perform authentication based on an identity of an application program, and record a quantity of times of secure calling and a quantity of times of defending against attacks, and a quantity of security vulnerabilities.

In embodiments of this application, the cloud server can record a quantity of times of secure calling and a quantity of times of defending against attacks in an application programming interface calling process, and prompt a quantity of security vulnerabilities. This improves security in the application programming interface calling process.

In a possible implementation, both the application program and the ecosystem service market are in a same cloud environment, and the cloud server may also separately isolate a secure local area network to reduce a risk of being attacked by an external network.

In embodiments of this application, the cloud server provides, based on a cloud native capability, a plurality of value-added services such as a security service and stability assurance for interface calling between cloud-based applications. This improves security of application programming interface calling.

A second aspect of embodiments of this application provides a cloud service apparatus. The apparatus includes a transceiver module, an ecosystem service module, an authentication module, and a calling module. The ecosystem service module is configured to provide an ecosystem service market, where the ecosystem service market is configured to provide a service for calling an application programming interface between different applications. The transceiver module is configured to receive, through the ecosystem service market, an interface calling request sent by a first application, where the interface calling request carries an identity of the first application, the interface calling request is used to call an application programming interface of a second application, and the identity is an identifier allocated by the ecosystem service market. The authentication module is configured to perform authentication on the identity of the first application through the ecosystem service market. If the authentication succeeds, the calling module calls the application programming interface of the second application through the ecosystem service market.

In a possible implementation, the transceiver module is further configured to receive, through the ecosystem service market, identity information sent by different applications, where the identity information includes one or more of the following information: service attribute information, industry information, and data scale information, and the different applications include the first application and the second application.

In a possible implementation, the ecosystem service module includes an analysis submodule. The analysis submodule is configured to perform ecosystem analysis on the identity information through the ecosystem service market, to obtain an analysis result, where the analysis result is used to recommend, to the first application, an application programming interface that can be called.

In a possible implementation, the ecosystem service module further includes a monitoring submodule. The monitoring submodule is configured to obtain, through the ecosystem service market, resource monitoring information corresponding to the second application, where the resource monitoring information includes central processing unit CPU usage, a memory capacity, and a bandwidth.

In a possible implementation, the ecosystem service module further includes a user interface UI submodule. The UI submodule is configured to display interface calling information through the ecosystem service market, where the interface calling information includes one or more of the following: a quantity of interface calling requests, a quantity of times of successful interface calling, interface calling duration, and traffic consumption statistics information.

In a possible implementation, the apparatus further includes a charging module. The charging module is configured to generate charging information based on the interface calling information, where the charging information includes one or more of the following: a total fee and an average daily fee that are generated for interface calling. A processing unit is further configured to perform settlement on the charging information through the ecosystem service market.

A third aspect of embodiments of this application provides a computing device cluster. The computing device cluster includes one or more computing devices. The computing device includes a processor. The processor is coupled to a memory. The processor is configured to store instructions. When the instructions are executed by the processor, the computing device cluster is enabled to perform the method according to any one of the first aspect or the possible implementations of the first aspect.

According to a fourth aspect, an embodiment of this application provides a computer-readable storage medium. The computer-readable storage medium stores instructions. When the instructions are executed, a computer is enabled to perform the method according to any one of the first aspect or the possible implementations of the first aspect.

A fifth aspect of embodiments of this application provides a computer program product. The computer program product includes instructions. When the instructions are executed, a computer is enabled to implement the method according to any one of the first aspect or the possible implementations of the first aspect.

It may be understood that, for beneficial effect that can be achieved by any one of the interface calling apparatus, the computing device cluster, the computer-readable medium, the computer program product, or the like provided above, refer to beneficial effect in the corresponding method. Details are not described herein again.

### BRIEF DESCRIPTION OF DRAWINGS

FIG. 1 is a diagram of an architecture of a cloud service system according to an embodiment of this application;
FIG. 2 is a schematic flowchart of an interface calling method according to an embodiment of this application;
FIG. 3 is a schematic flowchart of another interface calling method according to an embodiment of this application;
FIG. 4 is a diagram of a display interface of an ecosystem service market according to an embodiment of this application;
FIG. 5 is a diagram of a display interface of an ecosystem service market according to an embodiment of this application;
FIG. 6 is a diagram of a cloud service apparatus according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of a structure of another computing device cluster according to an embodiment of this application.

### DESCRIPTION OF EMBODIMENTS

Embodiments of this application provide an interface calling method and apparatus, to reduce interface opening costs of an application program.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

With reference to the accompanying drawings, the following describes an interface calling method and apparatus provided in embodiments of this application.

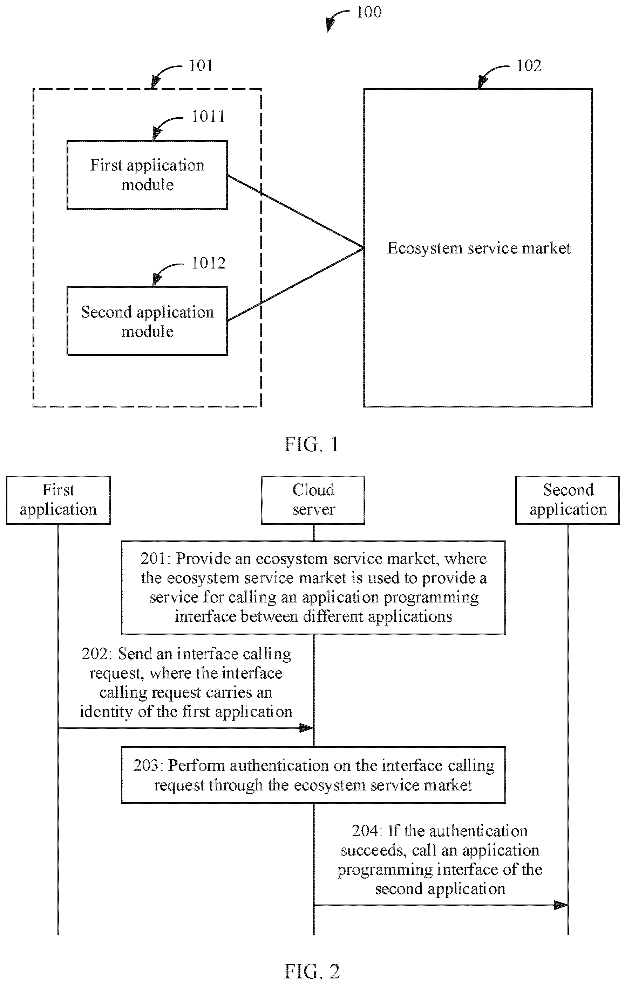

FIG. 1 is a diagram of an architecture of a system to which an interface calling method is applied according to an embodiment of this application. In the example shown in FIG. 1, a cloud service system 100 includes an application module 101 and an ecosystem service market 102. The application module 101 may be one or more application programming modules. For example, the application module 101 includes a first application module 1011 and a second application module 1012. The following describes specific functions of the modules in the cloud service system 100.

The application module 101 is configured to provide an application service for a user through the ecosystem service market 102. Specifically, the application module 101 calls an application programming interface of another application program through the ecosystem service market 102, or receives an interface calling request of another application program through the ecosystem service market 102. For example, the first application module 1011 is configured to call an application programming interface of the second application module 1012 through the ecosystem service market 102, to obtain an application service provided by the second application module 1012, where the application service is, for example, a map application service, an accommodation application service, or a catering application service.

The ecosystem service market 102 is configured to provide value-added services such as a security service and stability assurance for interface calling requests of different application programming modules 101. Specifically, the ecosystem service market 102 is configured to perform authentication and identity confirmation on different application programming modules 101, to ensure that interface calling requests of different application programming modules 101 are valid requests.

The ecosystem service market 102 is configured to provide application programming interface recommendation services for different application programming modules 101. Specifically, the ecosystem service market 102 is further configured to: receive identity information reported by different application modules 101, and perform ecosystem analysis based on the identity information, to recommend associated application programming interfaces to the different application modules 101. Different application modules 101 call interfaces based on a recommended application program structure, to implement a plurality of application services. The identity information includes one or more of the following information: service attribute information, industry information, and data scale information.

In this embodiment of this application, the first application module 1011, the second application module 1012, and the ecosystem service market 102 may be deployed on cloud servers provided by a same cloud vendor, or may be separately deployed on cloud servers provided by different cloud vendors. This is not specifically limited.

The following describes, with reference to FIG. 2, an interface calling method provided in an embodiment of this application.

FIG. 2 is a schematic flowchart of an interface calling method according to an embodiment of this application. In the example shown in FIG. 2, the interface calling method provided in this embodiment of this application includes the following steps.

201: A cloud server provides an ecosystem service market, where the ecosystem service market is configured to provide a service for calling an application programming interface between different applications.

In this embodiment of this application, the cloud server provides the ecosystem service market, and the ecosystem service market is configured to provide the service for calling the application programming interface between different applications. The ecosystem service market can provide an application programming interface recommendation service, a security service, a stability assurance service, and an interface calling information query service. Different application programs can select, through the ecosystem service market, application programming interfaces to be called.

In a possible implementation, the cloud server receives, through the ecosystem service market, identity information of different applications, where the identity information includes one or more of the following information: service attribute information, industry information, and data scale information. Different applications include a plurality of different application programs, and the different application programs are described by using a first application and a second application as an example.

The service attribute information is an attribute tag used to describe a market segment in which an application program is located, and one application may have service information in a plurality of dimensions. For example, service attribute information of a map application includes navigation and a service directly oriented to an end user (To C). The industry information is used to describe an industry to which an application program belongs. For example, industry information of the map application is a travel industry. The data scale information is an amount of data to be processed by an application program, and a data scale is, for example, 10 TB.

In this embodiment of this application, different application programs report the identity information to the ecosystem service market, and the ecosystem service market ensures that an interface calling request is valid for interface calling between different application programs. This improves security of application programming interface calling between different application programs.

In a possible implementation, after the cloud server receives the identity information reported by the application program, the cloud server performs ecosystem analysis on the identity information through the ecosystem service market, to obtain an analysis result, where the analysis result is used to recommend, to the first application, an application programming interface that can be called. The first application can select, based on the analysis result, an application programming interface to be called.

For example, for the map application, the cloud server performs ecosystem analysis on identity information of the map application through the ecosystem service market, to obtain an analysis result of a travel ecosystem associated with the map application. The analysis result includes application programming interfaces of an accommodation application, a weather application, and a parking lot application. The map application can select, based on the analysis result, an application programming interface to be called.

It should be noted that, in this embodiment of this application, the application program can set the identity information as privacy information. If the application program sets the identity information as the privacy information, the cloud server does not perform ecosystem analysis based on the identity information of the application.

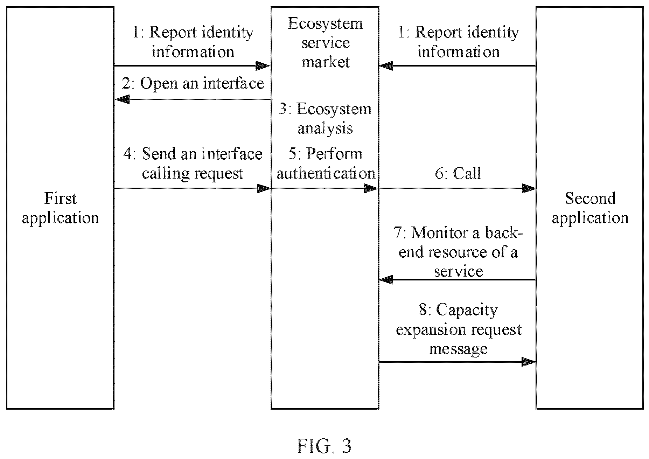

FIG. 3 is a schematic flowchart of an interface calling method according to this embodiment of this application. In step 1 and step 2 in the example shown in FIG. 3, the first application and the second application report application programming interface information and identity information to the ecosystem service market. The application programming interface information includes an interface document, and the identity information includes service attribute information, industry information, and data scale information. The ecosystem service market opens a program interface to the first application and the second application.

In step 3 in the example shown in FIG. 3, after the ecosystem service market receives identity information reported by the first application and identity information reported by the second application, the ecosystem service market performs related ecosystem analysis on the identity information reported by the first application, and an application programming interface that can be called is recommended to the first application based on the analysis result of the ecosystem analysis. For example, the first application is a map application, and the analysis result includes an application programming interface of a travel ecosystem associated with the map application, for example, application programming interfaces of applications such as a hotel application, a food application, a scenic spot application, and a parking lot application. The map application selects, from related recommended application programming interfaces, an application programming interface to be called.

In this embodiment of this application, the ecosystem service market can perform ecosystem analysis based on identity information reported by different application programs, to recommend, to different application programs, application programming interfaces that can be called. This improves richness of selecting the application programming interfaces that can be called by the application programs.

In this embodiment of this application, after the ecosystem service market performs ecosystem analysis based on the identity information of the first application, the ecosystem service market can display, in a management interface, an analysis result obtained through the ecosystem analysis. The analysis result includes an application programming interface related to the first application and interface details corresponding to the application programming interface, the interface details include the application programming interface identifier, a function keyword, an interface document, quotation, and a quantity of times of being called. The first application can select, from related application programming interfaces, an application program for calling.

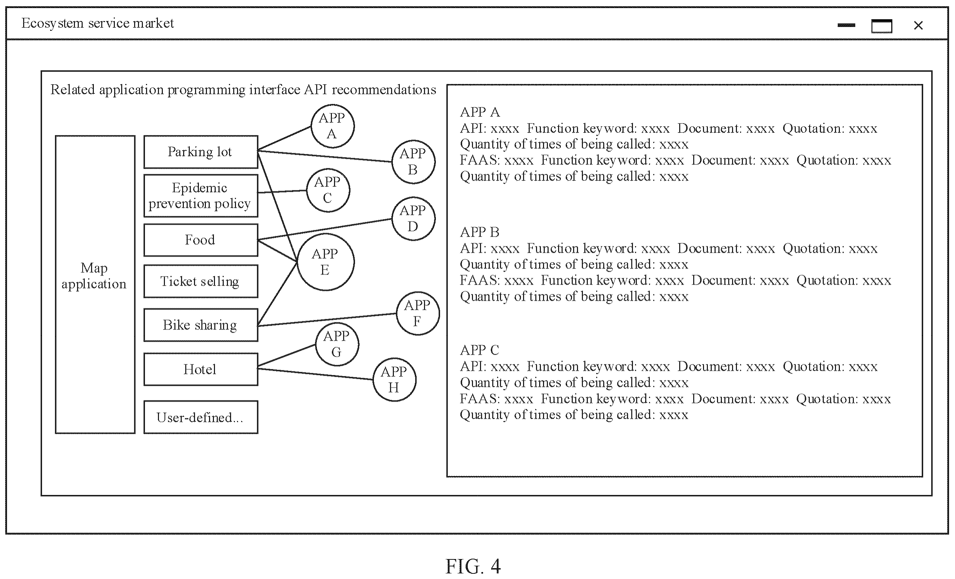

FIG. 4 is a diagram of a display interface of an ecosystem service market according to an embodiment of this application. In the example shown in FIG. 4, the ecosystem service market performs ecosystem analysis based on identity information of a map application, and displays an analysis result on a management display interface of the ecosystem service market. It can be learned from the display interface that the ecosystem service market analyzes a related ecosystem of the map application to obtain associated application programming interfaces.

For example, in the example shown in FIG. 4, after the ecosystem service market performs ecosystem analysis on the map application, the related ecosystem of the map application includes parking lot, epidemic prevention policy, food, ticket selling, bicycle sharing, and hotel. Different ecosystems correspond to one or more application programs. For example, application programs corresponding to the parking lot ecosystem include an APP A, an APP B, and an APP E. When the map application needs to call an application programming interface related to the parking lot, the map application can select, from the APP A, the APP B, and the APP E, to call application programming interfaces of the application programs.

In the example shown in FIG. 4, in addition to analyzing the related ecosystem of the map application and displaying a recommended application programming interface, the ecosystem service market can further display recommended application programming interface details in the display interface, the details include an application programming interface identifier, a function keyword, an interface document, a quotation, a quantity of times of being called, and the like.

In this embodiment of this application, the analysis result provided by the ecosystem service market includes details such as the identifier of the recommended application programming interface, the function keyword, the interface document, the quotation, and the quantity of times of being called, so that the application program can select, from recommended related application programming interfaces, based on the details, an application programming interface to be called. This improves interface calling efficiency of the application program.

202: The cloud server receives, through the ecosystem service market, an interface calling request sent by the first application, where the interface calling request carries an identity of the first application, and the interface calling request is used to call an application programming interface of the second application.

In this embodiment of this application, after the first application determines, from the recommended application programming interface, to call the application programming interface of the second application, the first application sends the interface calling request to the ecosystem service market, and the ecosystem service market receives the interface calling request sent by the first application. The interface calling request carries the identity of the first application, the interface calling request is used to call the application programming interface of the second application, and the identity is the identity provided by the ecosystem service market for the first application.

Still refer to FIG. 3. In step 4 in the example shown in FIG. 3, the ecosystem service market receives the interface calling request sent by the first application, where the interface calling request is used to request to call the application programming interface of the second application, and the interface calling request carries the identity of the first application.

203: The cloud server performs authentication on the interface calling request through the ecosystem service market.

After the cloud server receives the interface calling request, the cloud server performs authentication on the interface calling request through the ecosystem service market. Specifically, the ecosystem service market performs, based on the identity carried in the interface calling request, authentication on the interface calling request sent by the first application. If the identity carried in the interface calling request is consistent with the identity allocated by the ecosystem service market to the first application, it is determined that the interface calling request is valid, and the authentication succeeds.

Still refer to FIG. 3. In step 4 and step 5 in the example shown in FIG. 3, the ecosystem service market receives the interface calling request sent by the first application, where the interface calling request is used to request to call the application programming interface of the second application, and the interface calling request carries the identity of the first application. The ecosystem service market performs, based on the identity carried in the interface calling request, authentication on the interface calling request sent by the first application.

For example, the first application is the map application, the ecosystem service market receives the interface calling request sent by the first application, and the ecosystem service market performs, based on the identity carried in the interface calling request, authentication on the interface calling request sent by the map application. If the identity carried in the interface calling request is consistent with the identity pre-allocated by the ecosystem service market to the map application, it is determined that the interface calling request sent by the map application is valid, and the authentication succeeds.

In this embodiment of this application, the cloud server does not need to additionally agree on a key for performing authentication. Both the first application and the second application are cloud applications in the ecosystem service market. The cloud server provides identities for different applications through the ecosystem service market, so that identities of the first application and the second application are trusted.

204: If the authentication succeeds, the cloud server calls the application programming interface of the second application through the ecosystem service market.

If the authentication performed by the ecosystem service market on the interface calling request of the first application party succeeds, the first application may call the application programming interface of the second application through the ecosystem service market. Specifically, the ecosystem service market sends the interface calling request to the second application.

In a possible implementation, the cloud server obtains, through the ecosystem service market, resource monitoring information of the second application, where the resource monitoring information includes central processing unit CPU usage, a memory capacity, and a bandwidth of a back-end resource of the second application. The back-end resource of the second application includes a cloud resource used by the second application, and includes a processor resource, a storage resource, and a bandwidth resource. The ecosystem service market sends a capacity expansion request message to the second application based on the resource monitoring information. The second application performs, based on the capacity expansion request message, capacity expansion on the cloud resource corresponding to the second application. A capacity expansion object may be an elastic cloud server, an EVS disk, an object storage service, or a bandwidth.

Still refer to FIG. 3. In step 6 to step 8 in the embodiment shown in FIG. 3, after the authentication performed by the ecosystem service market on the interface calling request sent by the first application succeeds, the first application calls the application programming interface of the second application, to obtain a service provided by the second application. For example, the map application calls an application programming interface of a hotel application through the ecosystem service market, to implement a hotel reservation service provided by the hotel application.

In the example shown in FIG. 3, the ecosystem service market obtains the resource monitoring information of the second application, and sends the capacity expansion request message to the second application based on the resource monitoring information. For example, the ecosystem service market obtains bandwidth monitoring information of the hotel application. When the bandwidth monitoring information of the hotel application indicates that a current bandwidth is less than a bandwidth threshold, the ecosystem service market sends a capacity expansion request message to the hotel application, and the hotel application performs bandwidth capacity expansion based on the capacity expansion request message.

In this embodiment of this application, the ecosystem service market can obtain the resource monitoring information of the application program, and send the capacity expansion request message to the application program based on the resource monitoring information, to improve stability of providing an application service by the application programming interface.

In this embodiment of this application, the ecosystem service market can provide a security service for calling the application programming interface. Specifically, in a process in which the ecosystem service market provides the security service, the ecosystem service market can perform authentication based on an identity of an application program and record a quantity of times of secure calling, the ecosystem service market can further record a quantity of times of defending against attacks and prompt a security vulnerability, and the ecosystem service market can also perform risk level assessment and security scoring based on the application programming interface calling process.

In a possible implementation, when both the application program and the ecosystem service market are in a same cloud environment, the cloud server may also separately isolate a secure local area network to reduce a risk of being attacked by an external network.

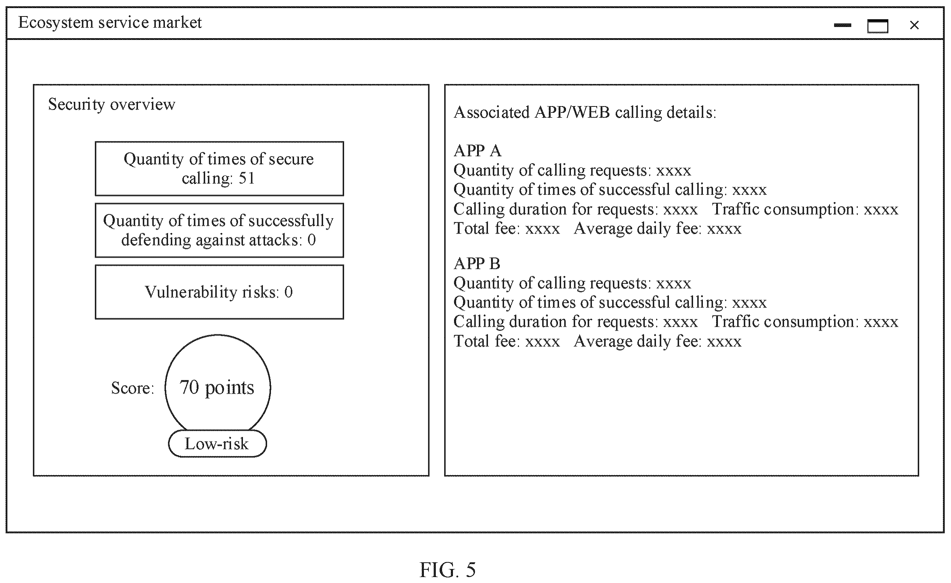

FIG. 5 is a diagram of another display interface of an ecosystem service market according to an embodiment of this application. In the example shown in FIG. 5, the ecosystem service market can provide a security service for application program calling, display a quantity of times of secure calling, a quantity of times of successfully defending against attacks, and a quantity of vulnerability risks in the display interface, and provide a security level and a security score. For example, in the "security overview" display interface shown in FIG. 5, the ecosystem service market identifies that the quantity of times of secure calling is 51, the quantity of times of successfully defending against attacks is 0, the quantity of vulnerability risks is 0, a risk level is low-risk, and the security score is 70.

In a possible implementation, after the ecosystem service market completes calling an application programming interface, the ecosystem service market generates interface calling information, and displays the interface calling information through the ecosystem service market, where the interface calling information includes one or more of the following: a quantity of interface calling requests, a quantity of times of successful interface calling, interface calling duration, and traffic consumption statistics information.

In a possible implementation, after the ecosystem service market generates the interface calling information, the ecosystem service market generates charging information based on the interface calling information, and displays the charging information through the ecosystem service market. The charging information includes one or more of the following: a total fee and an average daily fee that are generated for interface calling. The first application performs settlement on the charging information through the ecosystem service market.

Still refer to FIG. 5. In the example shown in FIG. 5, after the service ecosystem market completes calling the application programming interface, the ecosystem service market generates the interface calling information and the charging information, and displays the interface calling information and the charging information through the ecosystem service market. For example, in the display interface of "associated APP/WEB calling details" of the ecosystem service market shown in FIG. 5, the ecosystem service market can display interface calling information and charging information of the APP A. The interface calling information includes a quantity of calling requests, a quantity of times of successful calling, calling duration for requests, and traffic consumption, the charging information includes a total fee and an average daily fee.

It can be learned from the foregoing embodiment that, in this embodiment of this application, the cloud server provides, by providing the ecosystem service market, a service related to application programming interface calling for different application programs, so that different application programs can call the application programming interfaces through the ecosystem service market. This reduces interface opening costs of different application programs, and improves security of interface calling between different application programs.

The foregoing describes the interface calling method provided in embodiments of this application, and the following describes a cloud service apparatus provided in embodiments of this application.

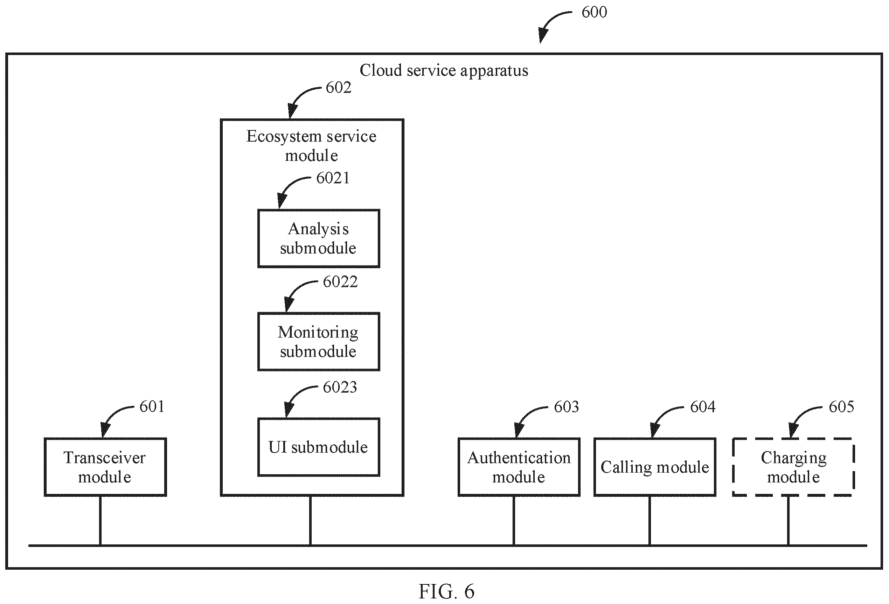

FIG. 6 is a diagram of a structure of a cloud service apparatus according to an embodiment of this application. In the example shown in FIG. 6, the cloud service apparatus is configured to implement the steps performed by the cloud server in the foregoing embodiments. The cloud service apparatus 600 includes a transceiver module 601, an ecosystem service module 602, an authentication module 603, and a calling module 604.

The ecosystem service module 602 is configured to provide an ecosystem service market, where the ecosystem service market is configured to provide a service for calling an application programming interface between different applications. The transceiver module 601 is configured to receive, through the ecosystem service market, an interface calling request sent by a first application, where the interface calling request carries an identity of the first application, the interface calling request is used to call an application programming interface of a second application, and the identity is an identifier allocated by the ecosystem service market. The authentication module 603 is configured to perform authentication on the identity of the first application through the ecosystem service market. If the authentication succeeds, the calling module 604 calls the application programming interface of the second application through the ecosystem service market.

In a possible implementation, the transceiver module 601 is further configured to receive, through the ecosystem service market, identity information sent by different applications, where the identity information includes one or more of the following information: service attribute information, industry information, and data scale information, and the different applications include the first application and the second application.

In a possible implementation, the ecosystem service module 602 includes an analysis submodule 6021. The analysis submodule 6021 is configured to perform ecosystem analysis on the identity information through the ecosystem service market, to obtain an analysis result, where the analysis result is used to recommend, to the first application, an application programming interface that can be called.

In a possible implementation, the ecosystem service module 602 further includes a monitoring submodule 6022. The monitoring submodule 6022 is further configured to obtain, through the ecosystem service market, resource monitoring information corresponding to the second application, where the resource monitoring information includes central processing unit CPU usage, a memory capacity, and a bandwidth.

In a possible implementation, the ecosystem service module 602 further includes a UI submodule 6023. The UI submodule 6023 is configured to display interface calling information through the ecosystem service market, where the interface calling information includes one or more of the following: a quantity of interface calling requests, a quantity of times of successful interface calling, interface calling duration, and traffic consumption statistics information.

In a possible implementation, the cloud service apparatus 600 further includes a charging module 605. The charging module 605 is configured to generate charging information based on the interface calling information, where the charging information includes one or more of the following: a total fee and an average daily fee that are generated for interface calling. A processing unit 602 is further configured to perform settlement on the charging information through the ecosystem service market.

It should be understood that division of the units in the foregoing apparatus is merely logical function division. During actual implementation, all or some of the units may be integrated into one physical entity, or may be physically separated. In addition, all the units in the apparatus may be implemented in a form of software called by a processing element, or may be implemented in a form of hardware; or some units may be implemented in a form of software called by a processing element, and some units may be implemented in a form of hardware. For example, each unit may be a separately disposed processing element, or may be integrated into a chip of the apparatus for implementation. In addition, each unit may alternatively be stored in a memory in a form of a program to be called by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software called by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all exemplary embodiments, and actions involved are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all exemplary embodiments, and actions involved are not necessarily required in the present invention or this application.

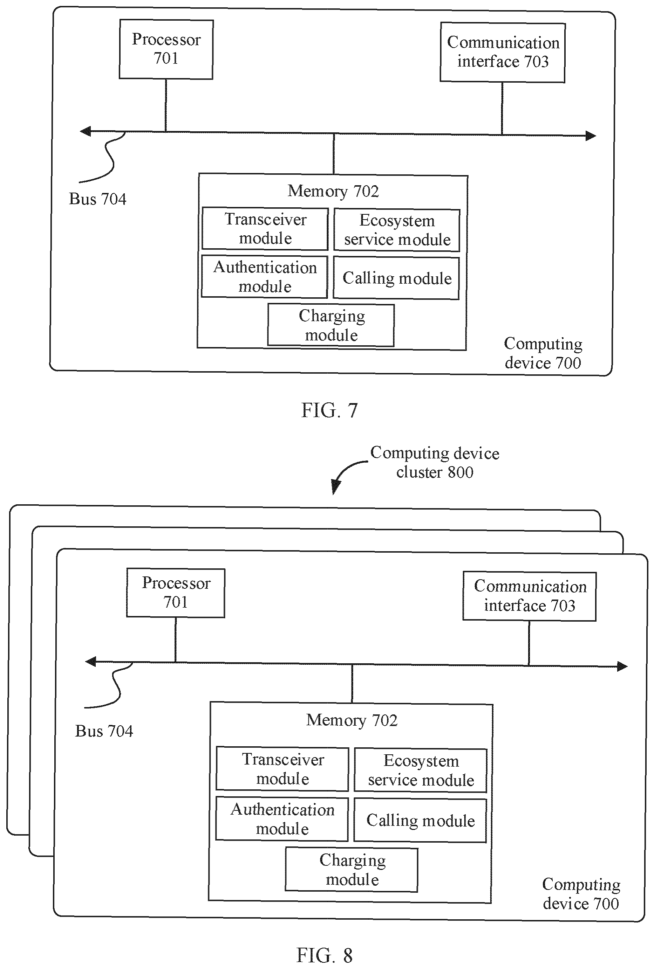

FIG. 7 is a diagram of a structure of a computing device according to an embodiment of this application. As shown in FIG. 7, the computing device 700 includes: a processor 701, a memory 702, a communication interface 703, and a bus 704. The processor 701, the memory 702, and the communication interface 703 are coupled through a bus (not marked in the figure). The memory 702 stores instructions. When execution instructions in the memory 702 are executed, the computing device 700 performs the methods performed by the cloud server in the foregoing method embodiments.

The computing device 700 may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may call the program. For still another example, the units may be integrated and implemented in a form of a system-on-a-chip (system-on-a-chip, SOC).

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, or any regular processor, or the like.

The memory 702 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 702 stores executable program code, and the processor 701 executes the executable program code to separately implement functions of the transceiver module, the ecosystem service module, the authentication module, the calling module, and the charging module, to implement the foregoing interface calling method. In other words, the memory 702 stores instructions used to perform the foregoing interface calling method.

The communication interface 703 uses a transceiver module, for example, but not limited to, a network interface card or a transceiver, to implement communication between the computing device 700 and another device or a communication network.

In addition to a data bus, the bus 704 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

FIG. 8 is a diagram of a computing device cluster according to an embodiment of this application. As shown in FIG. 8, the computing device cluster 800 includes at least one computing device 700.

As shown in FIG. 8, the computing device cluster 800 includes the at least one computing device 700. Memories 702 in one or more computing devices 700 in the computing device cluster 800 may store same instructions used to perform the foregoing interface calling method.

In some possible implementations, the memories 702 of the one or more computing devices 700 in the computing device cluster 800 may alternatively separately store some instructions used to perform the foregoing interface calling method. In other words, a combination of the one or more computing devices 700 may jointly execute instructions used to perform the foregoing interface calling method.

It should be noted that memories 702 in different computing devices 700 in the computing device cluster 800 may store different instructions separately used to perform some functions of the foregoing interface calling apparatus. In other words, instructions stored in the memories 702 in different computing devices 700 may implement functions of one or more of a transceiver module, an ecosystem service module, an authentication module, a calling module, and a charging module.

In some possible implementations, the one or more computing devices 700 in the computing device cluster 800 may be connected through a network. The network may be a wide area network, a local area network, or the like.

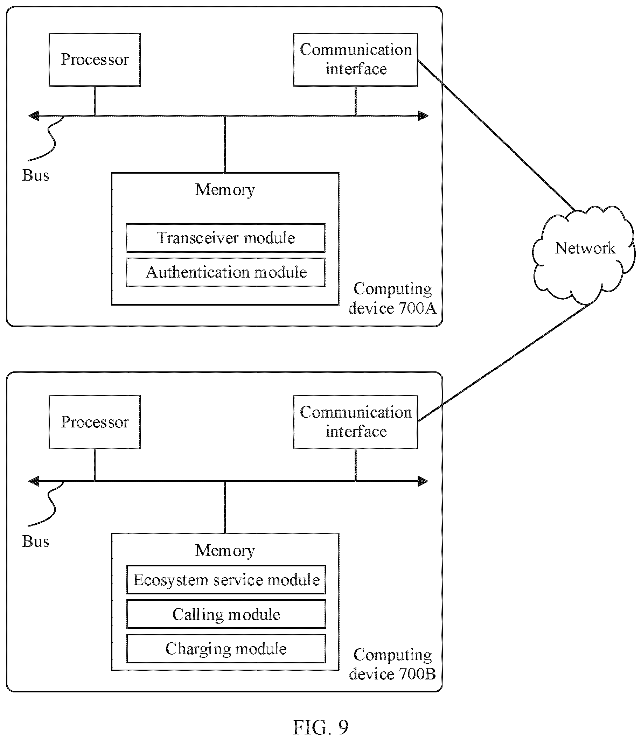

FIG. 9 is a diagram in which computer devices in a computer cluster are connected through a network according to an embodiment of this application. As shown in FIG. 9, two computing devices 700A and 700B are connected through a network. Specifically, each computing device is connected to the network via a communication interface of the computing device.

In a possible implementation, a memory in the computing device 700A stores instructions for performing functions of a transceiver module and an authentication module. In addition, a memory in the computing device 700B stores instructions for performing functions of an ecosystem service module, a calling module, and a charging module.

It should be understood that functions of the computing device 700A shown in FIG. 9 may alternatively be completed by a plurality of computing devices 700A. Similarly, functions of the computing device 700B may alternatively be completed by a plurality of computing devices.

In another embodiment of this application, a computer-readable storage medium is further provided. The computer-readable storage medium stores computer-executable instructions. When a processor of a device executes the computer-executable instructions, the device performs the methods performed by the cloud server in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the methods performed by the cloud server in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

## Claims

1. An interface calling method, applied to a cloud server, comprising:
providing an ecosystem service market, wherein the ecosystem service market is configured to provide a service for calling an application programming interface between different applications;
receiving, through the ecosystem service market, an interface calling request sent by a first application, wherein the interface calling request carries an identity of the first application, the interface calling request is used to call an application programming interface of a second application, and the identity is an identifier allocated by the ecosystem service market;
performing, through the ecosystem service market, authentication on the identity that is of the first application and that is carried in the interface calling request; and
if the authentication succeeds, calling the application programming interface of the second application through the ecosystem service market.

2. The method according to claim 1, wherein the method further comprises:
receiving, through the ecosystem service market, identity information sent by different applications, wherein the identity information comprises one or more of the following information: service attribute information, industry information, and data scale information, and the different applications comprise the first application and the second application.

3. The method according to claim 2, wherein the method further comprises:
performing ecosystem analysis on the identity information through the ecosystem service market, to obtain an analysis result, wherein the analysis result is used to recommend, to the first application, an application programming interface that can be called.

4. The method according to any one of claims 1 to 3, wherein the method further comprises:
obtaining, through the ecosystem service market, resource monitoring information corresponding to the second application, wherein the resource monitoring information comprises central processing unit CPU usage, a memory capacity, and a bandwidth.

5. The method according to any one of claims 1 to 4, wherein the method further comprises:
displaying interface calling information through the ecosystem service market, wherein the interface calling information comprises one or more of the following: a quantity of interface calling requests, a quantity of times of successful interface calling, interface calling duration, and traffic consumption statistics information.

6. The method according to claim 5, wherein the method further comprises:
generating charging information based on the interface calling information, wherein the charging information comprises one or more of the following: a total fee and an average daily fee that are generated for interface calling; and
performing settlement on the charging information through the ecosystem service market.

7. A cloud service apparatus, comprising a transceiver module, an ecosystem service module, an authentication module, and a calling module, wherein
the ecosystem service module is configured to provide an ecosystem service market, wherein the ecosystem service market is configured to provide a service for calling an application programming interface between different applications;
the transceiver module is configured to receive, through the ecosystem service market, an interface calling request sent by a first application, wherein the interface calling request carries an identity of the first application, the interface calling request is used to call an application programming interface of a second application, and the identity is an identifier allocated by the ecosystem service market;
the authentication module is configured to perform authentication on the identity of the first application through the ecosystem service market; and
if the authentication succeeds, the calling module is configured to call the application programming interface of the second application through the ecosystem service market.

8. The apparatus according to claim 7, wherein the transceiver module is further configured to:
receive, through the ecosystem service market, identity information sent by different applications, wherein the identity information comprises one or more of the following information: service attribute information, industry information, and data scale information, and the different applications comprise the first application and the second application.

9. The apparatus according to claim 8, wherein the ecosystem service module further comprises an analysis submodule, and the analysis submodule is further configured to:
perform ecosystem analysis on the identity information through the ecosystem service market, to obtain an analysis result, wherein the analysis result is used to recommend, to the first application, an application programming interface that can be called.

10. The apparatus according to any one of claims 7 to 9, wherein the ecosystem service module further comprises a monitoring submodule, and the monitoring submodule is configured to:
obtain, through the ecosystem service market, resource monitoring information corresponding to the second application, wherein the resource monitoring information comprises central processing unit CPU usage, a memory capacity, and a bandwidth.

11. The apparatus according to any one of claims 7 to 10, wherein the ecosystem service module further comprises a user interface UI submodule, and the UI submodule is configured to:
display interface calling information through the ecosystem service market, wherein the interface calling information comprises one or more of the following: a quantity of interface calling requests, a quantity of times of successful interface calling, interface calling duration, and traffic consumption statistics information.

12. The apparatus according to claim 11, wherein the apparatus further comprises a charging module, and the charging module is configured to:
generate charging information based on the interface calling information, wherein the charging information comprises one or more of the following: a total fee and an average daily fee that are generated for interface calling; and
perform settlement on the charging information through the ecosystem service market.

13. A computing device cluster, comprising one or more computing devices, wherein the computing device comprises a processor, the processor is coupled to a memory, the processor is configured to store instructions, and when the instructions are executed by the processor, the computing device cluster is enabled to perform the method according to any one of claims 1 to 6.

14. A computer-readable storage medium, wherein the computer-readable storage medium stores instructions, and when the instructions are executed, a computer is enabled to perform the method according to any one of claims 1 to 6.

15. A computer program product, wherein the computer program product comprises instructions, and when the instructions are executed, a computer is enabled to implement the method according to any one of claims 1 to 6.
